# EUROPEAN PATENT SPECIFICATION

(11) **EP 2 037 441 B1**
(45) Date of publication and mention of the grant of the patent: **18.03.2015**
(21) Application number: 08164515.2
(22) Date of filing: 17.09.2008
(51) Int. Cl.: G09G 3/34, G09G 3/36

(54) **Low-power image display device and method**
Bildanzeigevorrichtung mit niedrigem Stromverbrauch und Verfahren
Dispositif et procédé d'affichage d'images à faible puissance

(30) Priority: 17.09.2007 KR 20070094316
(43) Date of publication of application: 18.03.2009
(73) Proprietor: MagnaChip Semiconductor Ltd., Cheongju-si, Chungbuk 361-728 (KR)
(72) Inventor: Bae, Cheon Ho, 102-612, Sungwon Santevill, SEOUL (KR)
(74) Representative: Regimbeau

(56) References cited:
- WO-A1-2006/103835
- GB-A- 2 408 138
- HANFENG CHEN ET AL: "39.3: Locally Pixel-Compensated Backlight Dimming for Improving Static Contrast on LED Backlit LCDs" SID 2007, 2007 SID INTERNATIONAL SYMPOSIUM, SOCIETY FOR INFORMATION DISPLAY, LOS ANGELES, USA, vol. XXXVIII, 20 May 2007 (2007-05-20), pages 1339-1341, XP007013261 ISSN: 0007-966X
- CHANG N ET AL: "DLS: Dynamic Backlight Luminance Scaling of Liquid Crystal Display" IEEE TRANSACTIONS ON VERY LARGE SCALE INTEGRATION (VLSI) SYSTEMS, IEEE SERVICE CENTER, PISCATAWAY, NJ, US, vol. 12, no. 8, 1 August 2004 (2004-08-01) , pages 837-846, XP011115530 ISSN: 1063-8210

## Description

### CROSS-REFERENCE TO RELATED APPLICATIONS

This application claims the benefit of Korean Patent Application No. 10-2007-0094316 filed with the Korea Intellectual Property Office on November 17, 2007.

### BACKGROUND OF THE INVENTION

### 1. Field of the Invention

The present invention relates to a low-power image display device and method.

### 2. Description of the Related Art

In general, image display devices serve to display image data, applied from a camera or imaging device, in a state of visible light which can be seen by people. Televisions or beam projectors belong to the image display devices. Recently, with the development of technology, researches on image display devices using LCD (Liquid Crystal Display) or PDP (Plasma Display Panel) are actively carried out.

In particular, since the LCD cannot emit light by itself, an image display device using the LCD requires a separate light source for LCD. As for the light source for LCD, a CCFL (Cold Cathode Fluorescent Lamp) is mainly used. In terms of characteristics of the CCFL, the brightness and lifespan thereof are inversely proportional to each other. That is, when the CCFL is driven by a high current so as to increase the brightness, the lifespan is reduced. On the contrary, to increase the lifespan, the CCFL should be driven by a low current. Therefore, it is difficult to achieve high brightness. In most cases, however, high brightness and a long lifespan are simultaneously requested, when the CCFL is applied to products.

Hereinafter, a conventional image display device using the LCD panel will be described with reference to accompanying drawings.

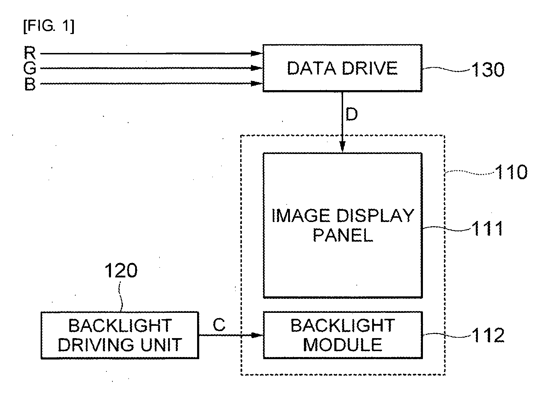

FIG. 1 is a block diagram of a conventional image display device.

As shown in FIG. 1, the conventional image display device includes an image display unit 110, a backlight driving unit 120, and a data drive 130.

The image display unit 110 is composed of an image display panel 111 and a backlight module 112 and is connected to the backlight driving unit 120 and the data drive 130. The image display unit 110 outputs image output data D, applied through the data drive 130, through the image display panel 111.

The backlight driving unit 120 generates a driving voltage C for driving the backlight module 112 so as to supply to the backlight module 112. The backlight module 112 is driven by the driving voltage C supplied from the backlight driving unit 120 so as to supply light to the image display panel 111 while maintaining constant brightness.

The data drive 130 delivers to the image display panel 111 the image output data D which is converted into data for outputting RGB image data applied from outside through the image display panel 111.

That is, to output the RGB image data, applied from outside, as visible light which can be seen by people, the image output data D converted by the data drive 130 is delivered to the image display panel 111. Further, to supply auxiliary light to the image display panel 111 which cannot emit light, the driving voltage C supplied through the backlight driving unit 120 is supplied to the backlight module 112 such that the RGB image data is displayed on the image display panel 111.

However, the conventional image display device has the following problems.

In the conventional image display device, a technique for high brightness and long-term lifespan is adopted, in which when an image should be displayed with high brightness or an external input is received from a user while the backlight module 112 is driven so as to display an image on the image display panel 111 with preset brightness, a high current is temporarily applied to the backlight module 112 such that an active region of the image display panel 111 with respect to the brightness is widened.

Further, when the image display panel 111 is used as the LCD, an amount of current used in the image display panel 111 differs depending on an image displayed on the image display panel 111. That is, in a case of the normally-white mode where liquid crystal molecules within the image display panel 111 are re-arranged in an electric-field direction with the application of voltage to the image display panel 111 such that incident light is cut off, the power consumption of the image display panel 111 is reduced, as the number of bright pixels increases in the image display panel 111. However, as the number of dark pixels increases, the power consumption of the image display unit 110 is increased.

To solve such a problem, a method is used in which a current value of the driving voltage C of the backlight module 112 interlocked with the image display panel 111 is controlled depending on the power consumption of the image display panel 111. When such a method is applied, an additional circuit should be implemented in such a manner that the conventional image display device fits into a variable range for controlling the brightness of the backlight driving unit 120 which detects the current consumed by the image display panel 111 and drives the backlight module 112.

Further, since all the images are controlled with the same brightness, power consumption increases in comparison with when the brightness should be controlled only for an image where the brightness control is required. As the brightness is adjusted, a brighter or darker image than an intended image may be output. Then, reliability of the image is degraded.

The paper "Locally Pixel-Compensated Backlight Dimming for Improving Static Contrast on LED Backlit LCDs," Hanfenh Chen et al, 2007 SID International Symposium, Los Angeles, USA, vol. XXXVIII, 20 May 2007, pages 1339-1341, presents a pixel compensated backlight dimming method for improving contrast on LED-LCD. The backlight luminance is dimmed locally along with image contents, and pixel values are compensated synchronously according to the luminance profile of dimmed backlight.

Document WO 2006/103835 discloses an image device including: maximum/minimum color information detection means for detecting a value (CMAX) of a maximum gradation or a value following the maximum gradation of a color signal and a value (CMIN) of a minimum gradation or a value following the minimum gradation of the color signal as color information on an input image signal; correction parameter generation means for setting a correction parameter according to input image signal color information (CMAX, CMIN); and gradation correction means for correcting the gradation of each color component of the input image signal according to the correction parameter. With the device it is possible to suppress color collapse and improve the contrast.

### SUMMARY OF THE INVENTION

An advantage of the present invention is that it provides a low-power image display device and method, as disclosed in independent claims 1 and 10, in which the contrast of image data output to the image display device and the brightness of backlight are simultaneously adjusted to output an image such that power consumption of a backlight module can be reduced and an image can be displayed clearly.

Additional aspects of the present general inventive concept are as set forth in the dependent claims.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:

FIG. 1 is a block diagram of a conventional image display device;

FIG. 2 is a block diagram of a low-power image display device according to the invention;

FIG. 3 is a graph showing a cumulative distribution function (CDF) of pixels and the brightness of the low-power image display device according to the invention;

FIGS. 4, 5A to 5D are graphs showing first and second weights which are applied in accordance with reference brightness of the low-power image display device according to the invention;

FIG. 6 is a flow chart sequentially showing an image display method according to the invention; and

FIGS. 7 and 8 are flow charts sequentially showing a process of converting the contrast of image data in the image display method according to the invention.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to like elements throughout. The embodiments are described below in order to explain the present general inventive concept by referring to the figures.

Low-Power Image Display Device

Hereinafter, a low-power image display device according to the invention will be described in detail with reference to the accompanying drawings.

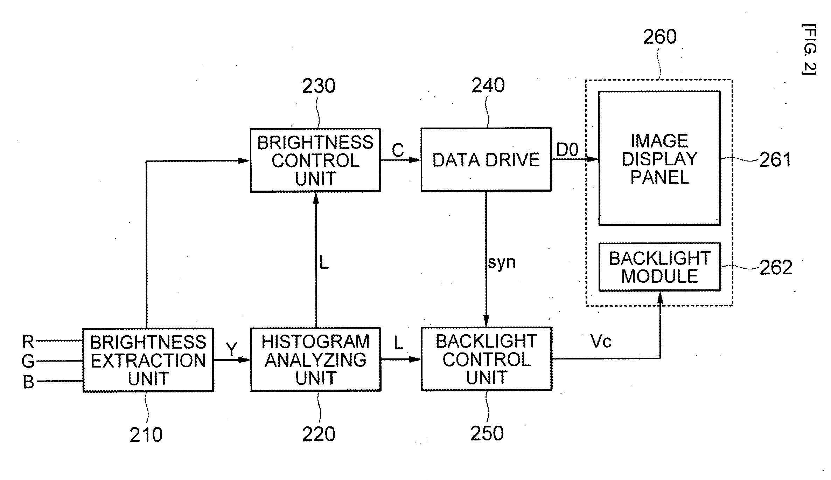

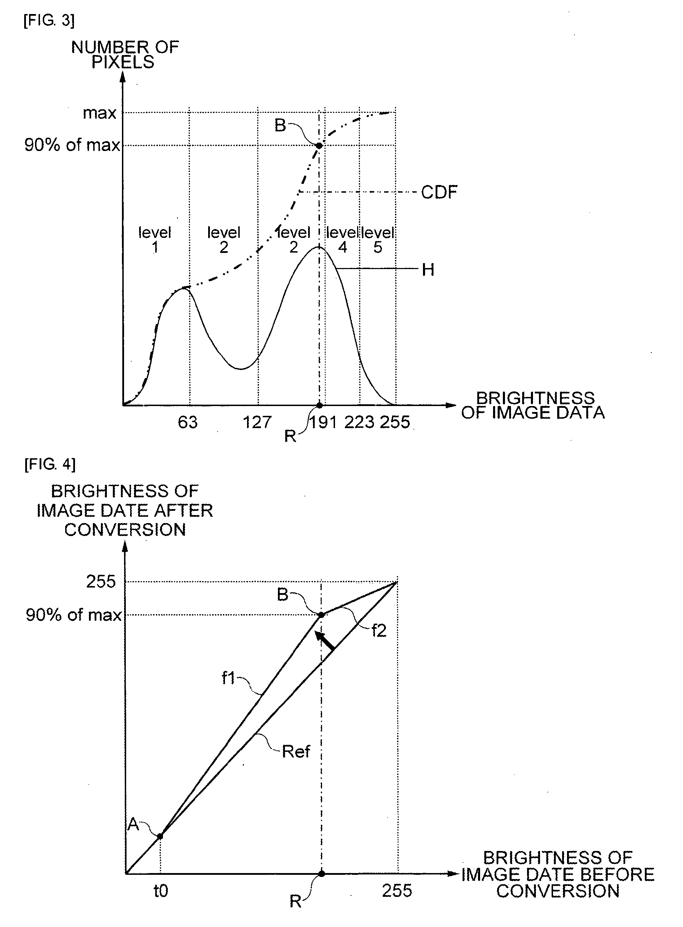

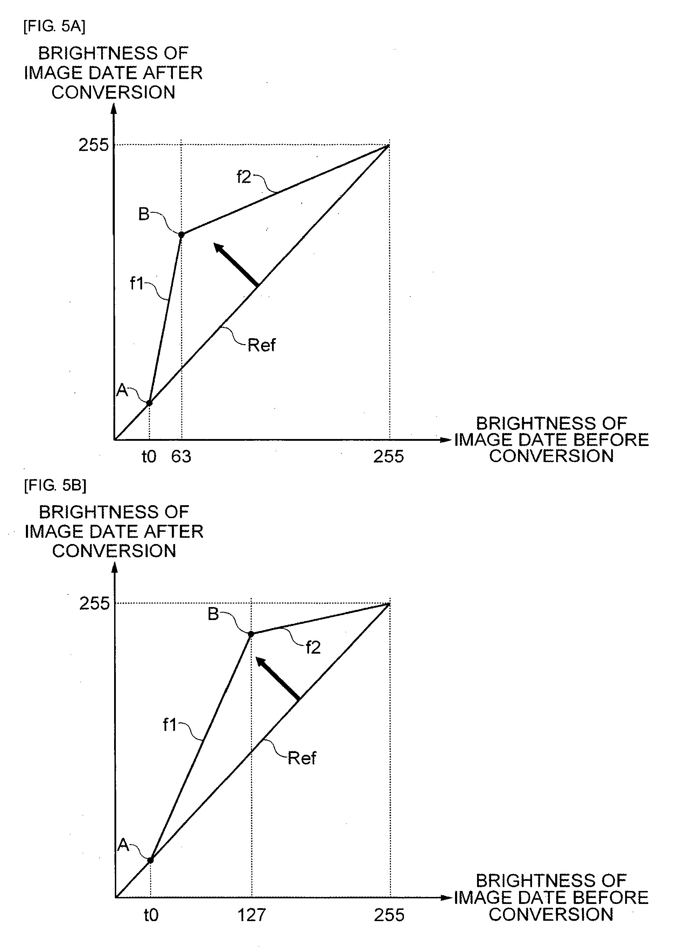

FIG. 2 is a block diagram of a low-power image display device according to the invention. FIG. 3 is a graph showing a cumulative distribution function (CDF) of pixels and the brightness of the low-power image display device according to the invention. FIGS. 4, 5A to 5D are graphs showing first and second weights which are applied in accordance with reference brightness of the low-power image display device according to the invention.

As shown in FIG. 2, the low-power image display device according to the invention includes a brightness determining unit 210, a histogram analyzing unit 220, a brightness control unit 230, a data drive 240, a backlight control unit 250, and an image display unit 260. The low-power image display device converts RGB image data applied from outside, and displays the RGB data on the image display unit 260 by using visual light which can be seen by people.

The brightness determining unit 210 is connected to the histogram analyzing unit 220 and the brightness control unit 230 and determines the brightness Y of RGB image data, applied from outside, to deliver to the histogram analyzing unit 220. Further, the brightness determining unit 210 delivers the RGB image data to the brightness control unit 230.

The histogram analyzing unit 220 is connected to the brightness determining unit 210, the brightness control unit 230, and the backlight control unit 250. As shown in FIG. 3, the histogram analyzing unit 220 calculates histograms H and a CDF of the RGB image data by using the brightness Y determined by the brightness determining unit 210. The CDF is a graph obtained by accumulating the histograms H depending on brightness. Further, the histogram analyzing unit 220 selects brightness corresponding to the number of pixels preset in the CDF as the reference brightness R of the RGB data by using the calculated CDF.

When the reference brightness R of the RGB image data is selected by the histogram analyzing unit 220, brightness corresponding to the number of pixels of the RGB image data when the CDF approaches 90% of the maximum value thereof, that is, brightness corresponding to a position of '90% of max' in FIG. 3 is selected as the reference brightness R. At this time, although the number of pixels of the RGB image data corresponding to 90% of the maximum value of the CDF is selected as the reference brightness R, the reference brightness R is not limited to 90% of the maximum value of the CDF, but may be set in the range of 80 to 90% depending on users.

The histogram analyzing unit 220 divides the brightness (0-255) of the RGB image data into a plurality of regions. In the invention, the brightness is divided into first to five regions. In this case, the first region (level 1) ranges from 0 to 63, the second region (level 2) ranges from 64 to 127, the third region (level 3) ranges from 128 to 191, the fourth region (level 4) ranges from 192 to 223, and the fifth region (level 5) ranges from 224 to 255. The reason why the histogram analyzing unit 220 divides the brightness of the RGB image data into the plurality of regions is as follows. Since the reference brightness R of the RGB image data corresponds to 90% of the brightness of the RGB image data, the reference brightness R may be a standard for displaying the RGB image data. Therefore, a ratio of contrast applied to the RGB image data is differently set for each region, where the reference brightness R is positioned, so as to effectively apply the contrast of the RGB data. Then, an image is clearly converted.

As described above, the histogram analyzing unit 220 calculates the CDF for the RGB image data, selects the reference brightness R, and divides the brightness of the RGB image data into the first to fifth regions (levels 1 to 5). Then, the histogram analyzing unit 220 delivers a position signal L to the brightness control unit 230 and the backlight control unit 250, respectively, the position signal L indicating to which region a reference point B of the CDF corresponding to the reference brightness R belongs.

The brightness control unit 230 is connected to the brightness determining unit 210, the histogram analyzing unit 220, and the data drive 240. The brightness control unit 230 applies a weight of contrast depending on the position signal L so as to convert the contrast of the RGB image data, applied from the brightness determining unit 210, into contrast corresponding to the reference brightness R.

At this time, when the brightness of the RGB image data is equal to or lower than predetermined brightness, the brightness control unit 230 judges that changing contrast is to reduce the sharpness of an image. Then, the brightness control unit 230 selects a black conversion point A serving as a reference point at which the RGB image data is output as it is. The black conversion point A is a position which has low brightness. As shown in FIG. 4, the black conversion point A corresponds to brightness t0 included in the first region (level 1).

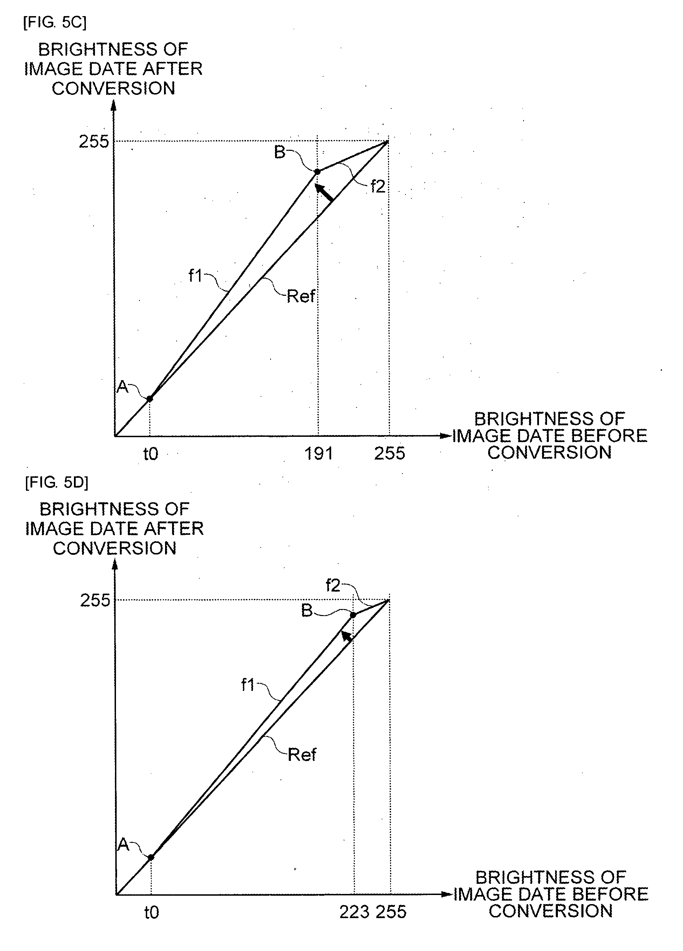

The brightness control unit 230 checks that the position signal L applied from the histogram analyzing unit 220 indicates to which region of the first to fifth regions (levels 1 to 5) the reference brightness R belongs. That is, when the position signal L is a signal indicating that the reference brightness R belongs to the first region (level 1), the brightness control unit 230 uses the graph of FIG. 5A. When the position signal L is a signal indicating that the reference brightness R belongs to the second region (level 2), the brightness control unit 230 uses the graph of FIG. 5B. When the position signal L is a signal indicating that the reference brightness R belongs to the third region (level 3), the brightness control unit 230 uses the graph of FIG. 5C. When the position signal L is a signal indicating that the reference brightness R belongs to the fourth region (level 4), the brightness control unit 230 uses the graph of FIG. 5D.

Further, the brightness control unit 230 applies a different weight to the brightness of the respective pixels composing the RGB image data on the basis of the brightness t0 of the black conversion point A and the reference brightness R, thereby converting the contrast of the pixels.

For example, when the position signal L applied from the histogram analyzing unit 220 is a signal indicating that the reference brightness R belongs to the first region (level 1), the brightness control unit 230 uses the graph of FIG. 5A. When a pixel which is firstly applied among the pixels of the RGB image data has lower brightness than that (t0) of the black conversion point A, the brightness control unit 230 outputs the applied pixel, without converting the contrast of the pixel. Further, when a pixel which is subsequently applied has higher brightness than that (t0) of the black conversion point A and lower brightness than the reference brightness R, the brightness control unit 230 multiplies the pixel by a first weight of 1.1875 corresponding to the first region of Table 1. Furthermore, when a pixel which is subsequently applied has higher brightness than the reference brightness R, the brightness control unit 230 multiplies the pixel by a second weight of 1 corresponding to the first region of Table 1, and then applies contrast by adding an offset value preset by a user to the multiplication result.

**[Table 1]**

| Position of reference brightness | First weight | Second weight |
|---|---|---|
| Fifth region | 1 | 1 |
| Fourth region | 1.0625 | 0.5 |
| Third region | 1.125 | 0.5 |
| Second region | 1.15625 | 0.75 |
| First region | 1.1875 | 1 |

When the position signal L is a signal indicating that the reference brightness R belongs to each of the second to fourth regions (levels 2 to 4), the brightness control unit 230 multiplies each pixel by the first or second weight of the region in the same manner as in the first region (level 1), thereby applying contrast to the pixel of the RGB image data.

If the position signal L is a signal indicating that the reference brightness R belongs to the fifth region (level 5), the brightness control unit 230 judges whether or not 40% of total pixels of the RGB data have higher brightness than 127 which is the middle brightness of the maximum brightness. If 40% of total pixels have lower brightness than 127, the brightness control unit 230 outputs the RGB image data without applying contrast to the RGB image data.

Meanwhile, when 40% of total pixels of the RGB image data has higher brightness than 127, the brightness control unit 230 converts the RGB image data in the same manner as in the applying of the contrast to the RGB data when the reference brightness R belongs to each of the first to fourth regions (levels 1 to 4).

Through the above-described method, the brightness control unit 230 applies contrast to the respective pixels of the RGB image data, thereby the sharpness of an image.

The data drive 240 is connected to the brightness control unit 230, the backlight control unit 250, and the image display unit 260. The data drive 240 receives the RGB image data, to which the contrast is applied, from the brightness control unit 230 and converts the RGB image data into an image output signal D0 to deliver to the image display unit 260, the image output signal D0 being a signal for displaying the RGB image data as an image to the outside. Further, the data drive 240 delivers the RGB image data and a synchronization signal syn to the backlight control unit 250 so as to simultaneously implement backlight brightness corresponding to the RGB image data.

The backlight control unit 250 is connected to the histogram analyzing unit 220, the data drive 240, and the image display unit 260. The backlight control unit 250 receives the position signal L and generates a backlight driving voltage Vc for changing the brightness of backlight depending on the region to which the reference brightness R belongs, as shown in Table 2. Then, the backlight control unit 250 delivers the generated driving voltage Vc to the image display unit 260.

**Table 2**

| Position of reference brightness | Backlight brightness (%) |
|---|---|
| Fifth region | 100 |
| Fourth region | 93.75 |
| Third region | 87.5 |
| Second region | 84.375 |
| First region | 81.25 |

For example, when the position signal L is a signal indicating that the reference brightness R belongs to the first region (level 1), the backlight control unit 250 generates a backlight driving voltage Vc for emitting brightness corresponding to 81.25% of reference backlight brightness. Further, when the position signal L is a signal indicating that the reference brightness R belongs to the third region (level 3), the backlight control unit 250 generates a backlight driving voltage Vc for emitting brightness corresponding to 87.5% of the reference backlight brightness.

Further, when the image output signal D0 for the RGB image signal output to the data drive 240 is output, the backlight control unit 250 is driven by the synchronization signal syn applied from the data drive 240 so as to be synchronized with the data drive 240. Then, the backlight control unit 250 outputs a backlight driving voltage Vc for emitting corresponding brightness.

As for the control method for controlling the backlight driving voltage Vc, any one is selected from PWM (Pulse Width Modulation), PAM (Pulse Amplitude Modulation), and PFM (Pulse Frequency Modulation) control methods.

The image display unit 260 is composed of an image display panel 261 and a backlight module 262 and is connected to the data drive 240 and the backlight control unit 250. The image display panel 261 receives the image output signal D0 applied from the data drive 240 and displays the image output signal D0 to the outside, and the backlight module 262 receives the backlight driving voltage Vc supplied from the backlight control unit 250 and then provides backlight as auxiliary light to the image display panel 261 such that the image display unit 260 can display an image to the outside.

In the low-power image display device constructed in such a manner, the contrast of the RGB image data is adjusted by the brightness control unit 230, and the backlight driving voltage Vc is adjusted by the backlight control unit 250. Therefore, the power consumption of the backlight module 262, which consumes the largest amount of power, can be adjusted. Accordingly, it is possible to reduce the entire power consumption of the image display device.

Further, as the contrast of the RGB image data is changed by the brightness control unit 230, the sharpness of an image can be enhanced.

Image Display Method

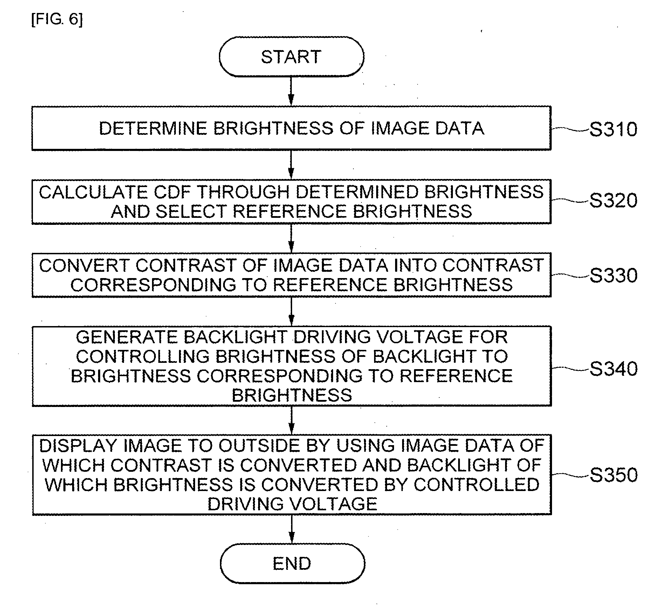

Hereinafter, an image display method according to the invention will be described with reference to FIGS. 6 to 8.

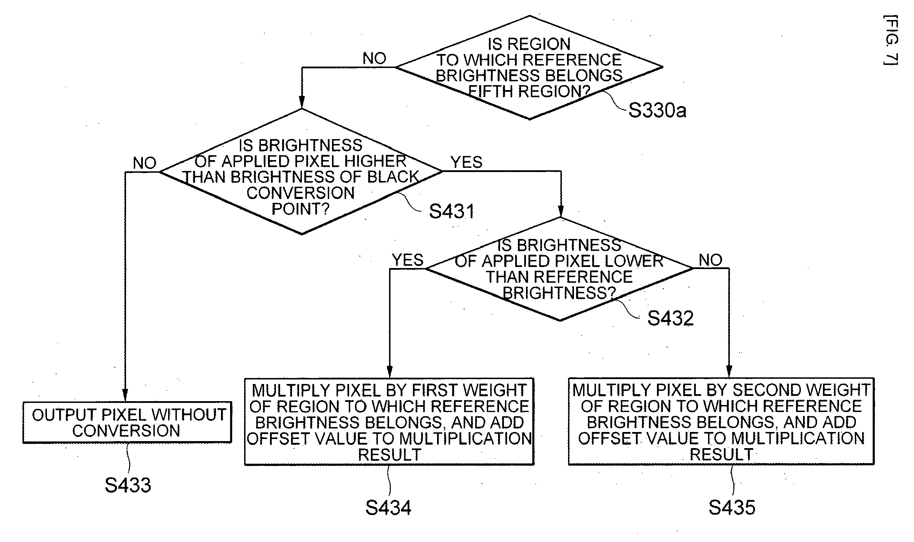

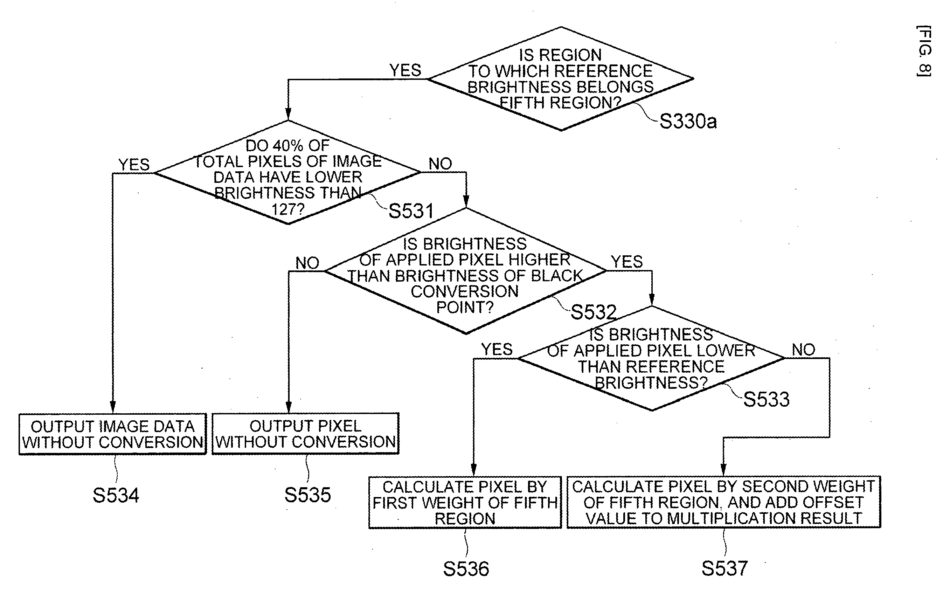

FIG. 6 is a flow chart sequentially showing an image display method according to the invention. FIGS. 7 and 8 are flow charts sequentially showing a process of converting the contrast of image data in the image display method according to the invention.

First, as shown in FIG. 6, the brightness of image data applied from outside is determined (step S310).

After the brightness of the image data is determined, a CDF is calculated through the determined brightness, and reference brightness is selected (step S320). At this time, the reference brightness in the step S320 is brightness corresponding to the number of pixels of the image data when the CDF approaches 90% of the maximum value thereof. Further, in step S320, the brightness of the image data is divided into first to fifth regions.

Then, it is judged to which region of the first to fifth regions the reference brightness selected in step S320 belongs, and the contrast of the image data is converted into the contrast of the corresponding region (step S330). At this time, step S330 is performed as follows. First, as shown in FIG. 7, it is judged whether or not the region to which the reference brightness belongs is the fifth region which is the brightest region among the first to fifth regions of the image data (step 330a).

When it is judged in step S330a that the region to which the reference brightness belongs is not the fifth region, it is judged whether or not each pixel of the applied image data has higher brightness than that of a black conversion point of which the brightness is preset to low brightness (step S431).

When it is judged in step S431 that the pixel of the applied image data has lower brightness than that of the black conversion point, contrast is not applied to the pixel of the applied image data, but the pixel is output as it is.

When it is judged in step S431 that the pixel of the applied image data has higher brightness than that of the black conversion point, it is judged whether or not the brightness of the applied pixel is lower than the reference brightness (step S432).

At this time, when it is judged in step S432 that the brightness of the applied pixel is lower than the reference brightness, the pixel is multiplied by a first weight of the region to which the reference brightness belongs such that contrast is applied to the pixel (step S434). Here, first and second weights are previously set as unique weights for changing the contrast of the image data for each of the first to fifth regions, as shown in Table 1. The first weight is applied to a pixel having lower brightness than the reference brightness, and the second weight is applied to a pixel having higher brightness than the reference brightness.

When it is judged in step S432 that the applied pixel has higher brightness than the reference brightness, the pixel is multiplied by a second weight of the region to which the reference brightness belongs. Then, an offset value preset by a user is added to the multiplication result such that contrast is applied to the pixel.

Further, as shown in FIG. 8, when it is judged in step S330a that the region to which the reference brightness belongs is the fifth region which has the highest brightness, it is judged whether or not 40% of total pixels of the image data have higher brightness than 127 which is the middle brightness of the maximum brightness of 255 (step S531).

When it is judged in step S531 that 40% of total pixels of the image data have lower brightness than 127, the image data is output without applying contrast to the image data (step S534).

At this time, when it is judged in step S531 that 40% of total pixels of the image data have higher brightness than 127, it is judged whether or not the applied pixel has higher brightness than that of the black conversion point (step S532).

When it is judged in step S532 that the applied pixel has lower brightness than that of the black conversion point, the pixel is output as it is, without applying contrast to the pixel (step S535).

Otherwise, when it is judged in step S532 that the applied pixel has higher brightness than that of the black conversion point, it is judged whether or not the pixel has higher brightness than the reference brightness (step S533).

When it is judged in step S533 that the applied pixel has lower brightness than the reference brightness, contrast is applied to the pixel by multiplying the pixel by the first weight of the fifth region, and the pixel is then output (step S536).

When it is judged in step 533 that the applied pixel has higher brightness than the reference brightness, the pixel is multiplied by the second weight of the fifth region, and an offset value preset by a user is added to the multiplication result such that contrast is applied to the pixel, and the pixel is then output (step S537).

In step S330 as described above, the brightness of the applied image data is determined, and a different weight is applied to the image data for each region so as to change the contrast, which makes it possible to enhance the sharpness of the image data.

After the contrast is applied to each pixel of the applied image data, a backlight driving voltage for controlling the brightness of backlight to brightness corresponding to the reference brightness is generated (step S340). As shown in Table 2, weights for controlling corresponding backlight brightness for each region, to which the reference brightness belongs, are previously set by a user.

As for the control method for controlling the backlight driving voltage, any one is selected from PWM, PAM, and PFM control methods.

Then, an image is displayed using the image data of which the contrast is changed in steps S330 and S340 and the backlight of which the brightness is changed by the controlled backlight driving voltage.

In the image display method, as the brightness of the backlight is adjusted depending on image data, a driving voltage for driving the backlight module, which consumes a larger amount of power, can be reduced. Further, the contrast of the image data is changed on the basis of the reference brightness, which makes it possible to enhance the sharpness of an output image.

According to the present invention, the contrast of image data output to the image display device and the brightness of backlight are simultaneously adjusted to output an image such that power consumption of a backlight module can be reduced and an image can be displayed clearly. Therefore, it is possible to enhance the reliability of the image.

Although a few embodiments of the present general inventive concept have been shown and described, it will be appreciated by those skilled in the art that changes may be made in these embodiments without departing from the principles of the general inventive concept, the scope of which is defined in the appended claims.

## Claims

1. An image display device comprising:
a brightness determining unit arranged to determine the brightness of image data applied from outside;
a histogram analyzing unit connected to the brightness determining unit, arranged to calculate a cumulative distribution function, CDF, of the determined image data brightness and to select from the cumulative distribution function a reference brightness;
a brightness control unit connected to the brightness determining unit and the histogram analyzing unit and arranged to convert the image data such that the contrast of the image data is converted into contrast corresponding to the reference brightness;
a data drive connected to the brightness control unit, arranged to receive the image data of which the contrast is changed, and arranged to convert the image data into an image output signal for displaying an image to the outside;
a backlight control unit connected to the histogram analyzing unit and the data drive, arranged to generate a driving voltage for controlling the brightness of backlight to brightness corresponding to the reference brightness; and
an image display unit connected to the data drive and the backlight control unit, arranged to receive the driving voltage generated from the backlight control unit and the image output signal, arranged to display an image by using the image data, of which the contrast is changed, and arranged to provide backlight of which the brightness is changed;
**characterized in that**
the histogram analyzing unit is arranged to select the reference brightness such that the number of pixels with brightness equal to or lower than the reference brightness equals a preset value, to divide the brightness range into a plurality of regions, each having a different brightness range and to determine which of the plurality of regions comprises the reference brightness; and
the brightness control unit is adapted for applying a first weight, set for the determined region, to image data having brightness lower than the reference brightness and a second weight, set for the determined region, to image data having brightness higher than the reference, the first and second weight, depending on the region to which the reference brightness belongs, the first weight set for each of the plurality of regions being a different weight corresponding to each of the plurality of regions having the different brightness range.

2. The image display device according to claim 1, wherein the preset value corresponds to a percentage of 80 to 90% of the number of pixels.

3. The image display device according to claim 1, wherein the brightness control unit is arranged to, when a pixel of the applied image data has lower brightness than that of a black conversion point for which the brightness of the image data is judged low, output the pixel as it is, without adjusting the brightness of the pixel.

4. The image display device according to claim 3, wherein the brightness control unit is arranged to, when the brightness of the applied pixel is higher than that of the black conversion point and is lower than the reference brightness, multiply the pixel by the first weight of a region to which the reference brightness belongs, thereby adjusting the brightness of the pixel.

5. The image display device according to claim 3, wherein the brightness control unit is arranged to, when the brightness of the applied pixel is higher than the reference brightness, multiply the pixel by the second weight of a region to which the reference brightness belongs, thereby adjusting the brightness of the pixel.

6. The image display device according to claim 5, wherein the brightness control unit is arranged to add an offset value preset by a user to the pixel multiplied by the second weight, thereby adjusting the brightness of the pixel.

7. The image display device according to claim 3, wherein the brightness control unit is arranged to, when the reference brightness belongs to the region having the highest brightness among the plurality of regions and 40% of total pixels of the image data have lower brightness than the middle brightness of the highest brightness in the CDF, output the image data as it is, without converting the contrast of the image data.

8. The image display device according to claim 1, wherein the backlight control unit is arranged to control the brightness of the backlight to a brightness attributed to the region to which the reference brightness of the image data belongs.

9. The image display device according to claim 8, wherein the backlight control unit is arranged to control the driving voltage through any one selected from PWM, Pulse Width Modulation, PAM, Pulse Amplitude Modulation, and PFM, Pulse Frequency Modulation, control methods.

10. An image display method comprising the steps of:
(a) determining the brightness of image data applied from outside;
(b) calculating a CDF of the image data from the determined brightness of the image data, and selecting, from the CDF, a reference brightness of the image data, for which the number of pixels with brightness equal to or lower than the reference brightness equals a preset value, dividing the brightness range into a plurality of regions having a different brightness range and determining which of the plurality of regions comprises the reference brightness;
(c) converting the contrast of the image data into contrast corresponding to the reference brightness by applying a first weight set for the determined region to image data having brightness lower than the reference brightness, and a second weight set for the determined region to image data having brightness higher than the reference, the first and second weights depending on the region to which the reference brightness belongs, the first weight set for each of the plurality of regions being a different weight corresponding to each of the plurality of regions having the different brightness range;
(d) generating a backlight driving voltage for controlling the brightness of backlight according to the region to which the reference brightness belongs; and
(e) displaying an image to the outside by using the image data of which the contrast is changed and by providing backlight, of which the brightness is changed.

11. The image display method according to claim 10, wherein the preset value corresponds to a percentage of 80 to 90% of the total number of pixels.

12. The image display method according to claim 10, wherein (c) step includes the steps of:
(c-1) judging whether or not a region to which the reference brightness belongs is a region having the maximum brightness among the plurality of regions;
(c-2) when it is judged that the reference brightness does not belongs to the region having the maximum brightness, judging whether or not each pixel of the applied image data has higher brightness than that of a black conversion point for which the brightness of the image data is judged low;
(c-3) when it is judged that the brightness of the pixel is higher than that of the black conversion point, judging whether or not the brightness of the pixel is lower than the reference brightness; and
(c-4) when it is judged that the brightness of the pixel is lower than the reference brightness, multiplying the pixel by the first weight of the region to which the reference brightness belongs.

13. The image display method according to claim 12, wherein when it is judged in step (c-3) that the brightness of the pixel is lower than that of the black conversion point, the pixel is output as it is, without any conversion.

14. The image display method according to claim 12, wherein when it is judged in step (c-4) that the brightness of the pixel is higher than the reference brightness, the pixel is multiplied by the second weight of the region to which the reference brightness belongs, and a preset offset value is added to the multiplication result such that contrast is applied.

15. The image display method according to claim 12, wherein when it is judged in step (c-2) that the reference brightness belongs to the region having the maximum brightness, step (c-2) includes the steps of:
(c-21) judging whether or not 40% of total pixels of the image data have higher brightness than the middle brightness of the maximum brightness;
(c-22) when it is judged that 40% of total pixels of the image data have higher brightness than the middle brightness of the maximum brightness, judging whether or not the brightness of each pixel of the applied image data is higher than that of the black conversion point;
(c-23) when it is judged that the brightness of the pixel is higher than that of the black conversion point, judging that the brightness of the pixel is higher than the reference brightness; and
(c-24) when it is judged that the brightness of the pixel is lower than the reference brightness, multiplying the pixel by the first weight of the region having the maximum brightness, thereby applying contrast.

16. The image display method according to claim 15, wherein when it is judged in step (c-22) that 40% of total pixels of the image data have lower brightness than the middle brightness of the maximum brightness, the applied image data is output as it is, without any conversion.

17. The image display method according to claim 15, wherein when it is judged in step (c-23) that the brightness of the pixel is lower than that of the black conversion point, the applied pixel is output as it is, without any conversion.

18. The image display method according to claim 15, wherein when it is judged in step (c-24) that the brightness of the pixel is higher than the reference brightness, the pixel is multiplied by the second weight of the region having the maximum brightness, and a preset offset value is added to the multiplication result such that contrast is applied.

19. The image display method according to claim 10, wherein the brightness to which the brightness of backlight is adjusted to in step (d) depends upon the region to which the reference brightness of the image data belongs.

20. The image display method according to claim 10, wherein the backlight driving voltage in step (d) is controlled by any one selected from PWM, PAM, and PFM control methods.

## Patentansprüche

1. Bildanzeigevorrichtung, die Folgendes umfasst:
- eine Helligkeitsbestimmungseinheit, die dafür ausgelegt ist, die Helligkeit von Bilddaten zu bestimmen, die von außen angewendet werden;
- eine Histogrammanalyseeinheit, die mit der Helligkeitsbestimmungseinheit verbunden ist und dafür ausgelegt ist, eine kumulative Verteilungsfunktion, CDF, der bestimmten Bilddatenhelligkeit zu berechnen und aus der kumulativen Verteilungsfunktion eine Referenzhelligkeit auszuwählen;
- eine Helligkeitssteuereinheit, die mit der Helligkeitsbestimmungseinheit und der Histogrammanalyseeinheit verbunden ist und dafür ausgelegt ist, die Bilddaten so umzuwandeln, dass der Kontrast der Bilddaten zu dem Kontrast umgewandelt wird, der der Referenzhelligkeit entspricht;
- eine Datenansteuerungsvorrichtung, die mit der Helligkeitssteuereinheit verbunden ist und dafür ausgelegt ist, die Bilddaten zu empfangen, deren Kontrast geändert wurde, und dafür ausgelegt ist, die Bilddaten in ein Bildausgangssignal umzuwandeln, um ein Bild nach außerhalb anzuzeigen;
- eine Hinterleuchtungssteuereinheit, die mit der Histogrammanalyseeinheit und der Datenansteuerungsvorrichtung verbunden ist und dafür ausgelegt ist, eine Ansteuerspannung zum Steuern der Helligkeit der Hinterleuchtung auf die Helligkeit, die der Referenzhelligkeit entspricht, zu erzeugen; und
- eine Bildanzeigeeinheit, die mit der Datenansteuerungsvorrichtung und der Hinterleuchtungssteuereinheit verbunden ist und dafür ausgelegt ist, die von der Hinterleuchtungssteuereinheit erzeugte Ansteuerspannung und das Bildausgangssignal zu empfangen, dafür ausgelegt ist, ein Bild unter Verwendung der Bilddaten, deren Kontrast geändert wurde, anzuzeigen, und dafür ausgelegt ist, eine Hinterleuchtung bereitzustellen, deren Helligkeit geändert wurde;
**dadurch gekennzeichnet, dass**
die Histogrammanalyseeinheit dafür ausgelegt ist, die Referenzhelligkeit so auszuwählen, dass die Anzahl von Pixeln mit einer Helligkeit, die gleich oder geringer ist als die Referenzhelligkeit, gleich einem voreingestellten Wert ist, den Helligkeitsbereich in mehrere Regionen zu unterteilen, von denen jede einen anderen Helligkeitsbereich hat, und zu bestimmen, welche der mehreren Regionen die Referenzhelligkeit umfasst; und
die Helligkeitssteuereinheit dafür ausgelegt ist, ein erstes Gewicht, das für die bestimmte Region eingestellt wurde, auf Bilddaten anzuwenden, deren Helligkeit niedriger als die Referenzhelligkeit ist, und ein zweites Gewicht, das für die bestimmte Region eingestellt wurde, auf Bilddaten anzuwenden, deren Helligkeit größer als die Referenz ist, wobei das erste und das zweite Gewicht von der Region abhängen, zu der die Referenzhelligkeit gehört, wobei das erste Gewicht, das für jede der mehreren Regionen eingestellt wurde, ein anderes Gewicht ist, das jeder der mehreren Regionen entspricht, die den anderen Helligkeitsbereich aufweisen.

2. Bildanzeigevorrichtung nach Anspruch 1, wobei der voreingestellte Wert einem Prozentsatz von 80 bis 90 % der Anzahl von Pixeln entspricht.

3. Bildanzeigevorrichtung nach Anspruch 1, wobei die Helligkeitssteuereinheit dafür ausgelegt ist, wenn ein Pixel der angewendeten Bilddaten eine geringere Helligkeit hat als die eines schwarzen Umwandlungspunktes, für den die Helligkeit der Bilddaten als niedrig beurteilt wird, das Pixel auszugeben wie es ist, ohne die Helligkeit des Pixels anzupassen.

4. Bildanzeigevorrichtung nach Anspruch 3, wobei die Helligkeitssteuereinheit dafür ausgelegt ist, wenn die Helligkeit des angewendeten Pixels größer ist als die des schwarzen Umwandlungspunktes und niedriger ist als die Referenzhelligkeit, das Pixel mit dem ersten Gewicht einer Region zu multiplizieren, zu der die Referenzhelligkeit gehört, wodurch die Helligkeit des Pixels angepasst wird.

5. Bildanzeigevorrichtung nach Anspruch 3, wobei die Helligkeitssteuereinheit dafür ausgelegt ist, wenn die Helligkeit des angewendeten Pixels größer ist als die Referenzhelligkeit, das Pixel mit dem zweiten Gewicht einer Region zu multiplizieren, zu der die Referenzhelligkeit gehört, wodurch die Helligkeit des Pixels angepasst wird.

6. Bildanzeigevorrichtung nach Anspruch 5, wobei die Helligkeitssteuereinheit dafür ausgelegt ist, einen durch einen Nutzer voreingestellten Versatzwert zu dem Pixel zu addieren, das mit dem zweiten Gewicht multipliziert wurde, wodurch die Helligkeit des Pixels angepasst wird.

7. Bildanzeigevorrichtung nach Anspruch 3, wobei die Helligkeitssteuereinheit dafür ausgelegt ist, wenn die Referenzhelligkeit zu der Region gehört, welche die größte Helligkeit unter den mehrere Regionen hat, und 40 % der Gesamtpixel der Bilddaten eine niedrigere Helligkeit haben als die mittlere Helligkeit der größten Helligkeit in der CDF, die Bilddaten auszugeben wie sie sind, ohne den Kontrast der Bilddaten umzuwandeln.

8. Bildanzeigevorrichtung nach Anspruch 1, wobei die Hinterleuchtungssteuereinheit dafür ausgelegt ist, die Helligkeit der Hinterleuchtung auf eine Helligkeit zu steuern, die der Region zugeordnet ist, zu der die Referenzhelligkeit der Bilddaten gehört.

9. Bildanzeigevorrichtung nach Anspruch 8, wobei die Hinterleuchtungssteuereinheit dafür ausgelegt ist, die Ansteuerspannung durch eines von Folgendem zu steuern: PWM, Impulsbreitenmodulations-Steuerungsverfahren, PAM, Impulsamplitudenmodulations-Steuerungsverfahren, und PFM, Impulsfrequenzmodulations-Steuerungsverfahren.

10. Bildanzeigeverfahren, das folgende Schritte umfasst:
(a) Bestimmen der Helligkeit von Bilddaten, die von außen angewendet werden;
(b) Berechnen einer CDF der Bilddaten anhand der bestimmten Helligkeit der Bilddaten, und Auswählen, aus der CDF, einer Referenzhelligkeit der Bilddaten, für welche die Anzahl von Pixeln, deren Helligkeit gleich oder geringer ist als die Referenzhelligkeit, gleich einem voreingestellten Wert ist, Teilen des Helligkeitsbereichs in mehrere Regionen, die einen anderen Helligkeitsbereich haben, und Bestimmen, welche der mehreren Regionen die Referenzhelligkeit umfasst;
(c) Umwandeln des Kontrasts der Bilddaten in einen Kontrast, welcher der Referenzhelligkeit entspricht, durch Anwenden eines ersten Gewichts, das für die bestimmte Region eingestellt wurde, auf Bilddaten, deren Helligkeit niedriger ist als die Referenzhelligkeit, und eines zweiten Gewichts, das für die bestimmte Region eingestellt wurde, auf Bilddaten, deren Helligkeit größer als die Referenz ist, wobei das erste und das zweite Gewicht von der Region abhängen, zu der die Referenzhelligkeit gehört, wobei das erste Gewicht, das für jede der mehreren Regionen eingestellt wurde, ein anderes Gewicht ist, das jeder der mehreren Regionen entspricht, die den anderen Helligkeitsbereich aufweisen;
(d) Erzeugen einer Hinterleuchtungs-Ansteuerspannung zum Steuern der Helligkeit der Hinterleuchtung gemäß der Region, zu der die Referenzhelligkeit gehört; und
(e) Anzeigen eines Bildes nach außerhalb unter Verwendung der Bilddaten, deren Kontrast geändert wurde, und durch Bereitstellen einer Hinterleuchtung, deren Helligkeit geändert wurde.

11. Bildanzeigeverfahren nach Anspruch 10, wobei der voreingestellte Wert einem Prozentsatz von 80 bis 90 % der Gesamtanzahl von Pixeln entspricht.

12. Bildanzeigeverfahren nach Anspruch 10, wobei der Schritt (c) folgende Schritte umfasst:
(c-1) Beurteilen, ob eine Region, zu der die Referenzhelligkeit gehört, eine Region ist, welche die maximale Helligkeit unter den mehreren Regionen besitzt, oder nicht;
(c-2) wenn beurteilt wird, dass die Referenzhelligkeit nicht zu der Region mit der maximalen Helligkeit gehört, Beurteilen, ob jedes Pixels der angewendeten Bilddaten eine größere Helligkeit als die eines schwarzen Umwandlungspunktes hat, für den die Helligkeit der Bilddaten als niedrig beurteilt wird, oder nicht;
(c-3) wenn beurteilt wird, dass die Helligkeit des Pixels größer ist als die des schwarzen Umwandlungspunktes, Beurteilen, ob die Helligkeit des Pixels niedriger ist als die Referenzhelligkeit oder nicht; und
(c-4) wenn beurteilt wird, dass die Helligkeit des Pixels niedriger ist als die Referenzhelligkeit, Multiplizieren des Pixels mit dem ersten Gewicht der Region, zu der die Referenzhelligkeit gehört.

13. Bildanzeigeverfahren nach Anspruch 12, wobei, wenn in Schritt (c-3) beurteilt wird, dass die Helligkeit des Pixels niedriger ist als die des schwarzen Umwandlungspunktes, das Pixel ohne Umwandlung ausgegeben wird wie es ist.

14. Bildanzeigeverfahren nach Anspruch 12, wobei, wenn in Schritt (c-4) beurteilt wird, dass die Helligkeit des Pixels größer ist als die Referenzhelligkeit, das Pixel mit dem zweiten Gewicht der Region multipliziert wird, zu der die Referenzhelligkeit gehört, und ein voreingestellter Versatzwert zu dem Multiplikationsergebnis addiert wird, so dass der Kontrast angewendet wird.

15. Bildanzeigeverfahren nach Anspruch 12, wobei, wenn in Schritt (c-2) beurteilt wird, dass die Referenzhelligkeit zu der Region gehört, welche die maximale Helligkeit hat, Schritt (c-2) folgende Schritte umfasst:
(c-21) Beurteilen, ob 40 % der Gesamtpixel der Bilddaten eine größere Helligkeit haben als die mittlere Helligkeit der maximalen Helligkeit oder nicht;
(c-22) wenn beurteilt wird, dass 40 % der Gesamtpixel der Bilddaten eine größere Helligkeit haben als die mittlere Helligkeit der maximalen Helligkeit, Beurteilen, ob die Helligkeit jedes Pixels der angewendeten Bilddaten größer ist als die des schwarzen Umwandlungspunktes oder nicht;
(c-23) wenn beurteilt wird, dass die Helligkeit des Pixels größer ist als die des schwarzen Umwandlungspunktes, Beurteilen, dass die Helligkeit des Pixels größer ist als die Referenzhelligkeit; und
(c-24) wenn beurteilt wird, dass die Helligkeit des Pixels niedriger ist als die Referenzhelligkeit, Multiplizieren des Pixels mit dem ersten Gewicht der Region, welche die maximale Helligkeit aufweist, wodurch der Kontrast angewendet wird.

16. Bildanzeigeverfahren nach Anspruch 15, wobei, wenn in Schritt (c-22) beurteilt wird, dass 40 % der Gesamtpixel der Bilddaten eine geringere Helligkeit haben als die mittlere Helligkeit der maximalen Helligkeit, die angewendeten Bilddaten ohne Umwandlung ausgegeben werden wie sie sind.

17. Bildanzeigeverfahren nach Anspruch 15, wobei, wenn in Schritt (c-23) beurteilt wird, dass die Helligkeit des Pixels niedriger ist als die des schwarzen Umwandlungspunktes, das angewendete Pixel ohne Umwandlung ausgegeben wird wie es ist.

18. Bildanzeigeverfahren nach Anspruch 15, wobei, wenn in Schritt (c-24) beurteilt wird, dass die Helligkeit des Pixels größer ist als die Referenzhelligkeit, das Pixel mit dem zweiten Gewicht der Region multipliziert wird, welche die maximale Helligkeit aufweist, und ein voreingestellter Versatzwert zu dem Multiplikationsergebnis addiert wird, so dass der Kontrast angewendet wird.

19. Bildanzeigeverfahren nach Anspruch 10, wobei die Helligkeit, zu der die Helligkeit der Hinterleuchtung in Schritt (d) angepasst wird, von der Region abhängt, zu der die Referenzhelligkeit der Bilddaten gehört.

20. Bildanzeigeverfahren nach Anspruch 10, wobei die Hinterleuchtungs-Ansteuerspannung in Schritt (d) durch eines von Folgendem gesteuert wird: PWM-Steuerungsverfahren, PAM-Steuerungsverfahren, und PFM-Steuerungsverfahren.

## Revendications

1. Dispositif d'affichage d'image comprenant :
une unité de détermination de luminosité agencée pour déterminer la luminosité de données d'image appliquées depuis l'extérieur ;
une unité d'analyse d'histogramme connectée à l'unité de détermination de luminosité, agencée pour calculer une fonction de distribution cumulative, CDF, de la luminosité de données d'image déterminée et sélectionner à partir de la fonction de distribution cumulative une luminosité de référence ;
une unité de commande de luminosité connectée à l'unité de détermination de luminosité et à l'unité d'analyse d'histogramme et agencée pour convertir les données d'image de sorte que le contraste des données d'image soit converti en contraste correspondant à la luminosité de référence ;
un pilote de données connecté à l'unité de commande de luminosité, agencé pour recevoir les données d'image dont le contraste est changé, et agencé pour convertir les données d'image en un signal de sortie d'image pour afficher une image vers l'extérieur ;
une unité de commande de rétroéclairage connectée à l'unité d'analyse d'histogramme et au pilote de données, agencée pour générer une tension de pilotage pour commander la luminosité de rétroéclairage à une luminosité correspondant à la luminosité de référence ; et
une unité d'affichage d'image connectée au pilote de données et à l'unité de commande de rétroéclairage, agencée pour recevoir la tension de pilotage générée à partir de l'unité de commande de rétroéclairage et le signal de sortie d'image, agencée pour afficher une image en utilisant les données d'image, dont le contraste est changé, et agencée pour fournir un rétroéclairage dont la luminosité est changée ;
**caractérisé en ce que** l'unité d'analyse d'histogramme est agencée pour sélectionner la luminosité de référence de sorte que le nombre de pixels avec une luminosité égale ou inférieure à la luminosité de référence soit égal à une valeur préétablie, pour diviser la plage de luminosité en une pluralité de régions, chacune ayant une plage de luminosité différente et pour déterminer laquelle de la pluralité de régions comprend la luminosité de référence ; et
l'unité de commande de luminosité est adaptée pour appliquer un premier poids, établi pour la région déterminée, à des données d'image ayant une luminosité inférieure à la luminosité de référence et un second poids, établi pour la région déterminée, à des données d'image ayant une luminosité supérieure à la référence, les premier et second poids dépendant de la région à laquelle appartient la luminosité de référence, le premier poids établi pour chacune de la pluralité de régions étant un poids différent correspondant à chacune de la pluralité de régions ayant la plage de luminosité différente.

2. Dispositif d'affichage d'image selon la revendication 1, dans lequel la valeur préétablie correspond à un pourcentage de 80 à 90% du nombre de pixels.

3. Dispositif d'affichage d'image selon la revendication 1, dans lequel l'unité de commande de luminosité est agencée pour, lorsqu'un pixel des données d'image appliquées a une luminosité inférieure à celle d'un point de conversion noir pour lequel la luminosité des données d'image est jugée faible, sortir le pixel tel quel, sans ajuster la luminosité du pixel.

4. Dispositif d'affichage d'image selon la revendication 3, dans lequel l'unité de commande de luminosité est agencée pour, lorsque la luminosité du pixel appliqué est supérieure à celle du point de conversion noir et est inférieure à la luminosité de référence, multiplier le pixel par le premier poids d'une région à laquelle appartient la luminosité de référence, ajustant ainsi la luminosité du pixel.

5. Dispositif d'affichage d'image selon la revendication 3, dans lequel l'unité de commande de luminosité est agencée pour, lorsque la luminosité du pixel appliqué est supérieure à la luminosité de référence, multiplier le pixel par le second poids d'une région à laquelle appartient la luminosité de référence, ajustant ainsi la luminosité du pixel.

6. Dispositif d'affichage d'image selon la revendication 5, dans lequel l'unité de commande de luminosité est agencée pour ajouter une valeur de décalage préétablie par un utilisateur au pixel multiplié par le second poids, ajustant ainsi la luminosité du pixel.

7. Dispositif d'affichage d'image selon la revendication 3, dans lequel l'unité de commande de luminosité est agencée pour, lorsque la luminosité de référence appartient à la région ayant la luminosité la plus élevée parmi la pluralité de régions et 40% du total des pixels des données d'image ont une luminosité inférieure à la luminosité moyenne de la luminosité la plus élevée dans la CDF, sortir les données d'image telles quelles, sans convertir le contraste des données d'image.

8. Dispositif d'affichage d'image selon la revendication 1, dans lequel l'unité de commande de rétroéclairage est agencée pour commander la luminosité du rétroéclairage à une luminosité attribuée à la région à laquelle appartient la luminosité de référence des données d'image.

9. Dispositif d'affichage d'image selon la revendication 8, dans lequel l'unité de commande de rétroéclairage est agencée pour commander la tension de pilotage par l'intermédiaire d'un procédé de commande quelconque sélectionné parmi des procédés de commande PWM, Pulse Width Modulation (modulation d'impulsions en largeur), PAM, Pulse Amplitude Modulation (modulation d'impulsions en amplitude), et PFM, Pulse Frequency Modulation (modulation d'impulsions en fréquence).

10. Procédé d'affichage d'image comprenant les étapes consistant à :
(a) déterminer la luminosité de données d'image appliquées depuis l'extérieur ;
(b) calculer une CDF des données d'image à partir de la luminosité des données d'image déterminée, et sélectionner, à partir de la CDF, une luminosité de référence des données d'image pour lesquelles le nombre de pixels avec une luminosité égale ou inférieure à la luminosité de référence est égal à une valeur préétablie, diviser la plage de luminosité en une pluralité de régions ayant une plage de luminosité différente et déterminer laquelle de la pluralité de régions comprend la luminosité de référence ;
(c) convertir le contraste des données d'image en contraste correspondant à la luminosité de référence en appliquant un premier poids établi pour la région déterminée à des données d'image ayant une luminosité inférieure à la luminosité de référence, et un second poids établi pour la région déterminée à des données d'image ayant une luminosité supérieure à la référence, les premier et second poids dépendant de la région à laquelle appartient la luminosité de référence, le premier poids établi pour chacune de la pluralité de régions étant un poids différent correspondant à chacune de la pluralité de régions ayant la plage de luminosité différente ;
(d) générer une tension de pilotage de rétroéclairage pour commander la luminosité de rétroéclairage en fonction de la région à laquelle appartient la luminosité de référence ; et
(e) afficher une image vers l'extérieur en utilisant les données d'image dont le contraste est changé et en fournissant un rétroéclairage dont la luminosité est changée.

11. Procédé d'affichage d'image selon la revendication 10, dans lequel la valeur préétablie correspond à un pourcentage de 80 à 90% du nombre total de pixels.

12. Procédé d'affichage d'image selon la revendication 10, dans lequel l'étape (c) comprend les étapes consistant à :
(c-1) juger si oui ou non une région à laquelle appartient la luminosité de référence est une région ayant la luminosité maximale parmi la pluralité de régions ;
(c-2) lorsqu'il est jugé que la luminosité de référence n'appartient pas à la région ayant la luminosité maximale, juger si oui ou non chaque pixel des données d'image appliquées a une luminosité supérieure à celle d'un point de conversion noir pour lequel la luminosité des données d'image est jugée faible ;
(c-3) lorsqu'il est jugé que la luminosité du pixel est supérieure à celle du point de conversion noir, juger si oui ou non la luminosité du pixel est inférieure à la luminosité de référence ; et
(c-4) lorsqu'il est jugé que la luminosité du pixel est inférieure à la luminosité de référence, multiplier le pixel par le premier poids de la région à laquelle appartient la luminosité de référence.

13. Procédé d'affichage d'image selon la revendication 12, dans lequel lorsqu'il est jugé à l'étape (c-3) que la luminosité du pixel est inférieure à celle du point de conversion noir, le pixel est sorti tel quel, sans aucune conversion.

14. Procédé d'affichage d'image selon la revendication 12, dans lequel lorsqu'il est jugé à l'étape (c-4) que la luminosité du pixel est supérieure à la luminosité de référence, le pixel est multiplié par le second poids de la région à laquelle appartient la luminosité de référence, et une valeur de décalage préétablie est ajoutée au résultat de multiplication de sorte qu'un contraste soit appliqué.

15. Procédé d'affichage d'image selon la revendication 12, dans lequel lorsqu'il est jugé à l'étape (c-2) que la luminosité de référence appartient à la région ayant la luminosité maximale, l'étape (c-2) comprend les étapes consistant à :
(c-21) juger si oui ou non 40% du total des pixels des données d'image ont une luminosité supérieure à la luminosité moyenne de la luminosité maximale ;
(c-22) lorsqu'il est jugé que 40% du total des pixels des données d'image ont une luminosité supérieure à la luminosité moyenne de la luminosité maximale, juger si oui ou non la luminosité de chaque pixel des données d'image appliquées est supérieure à celle du point de conversion noir ;
(c-23) lorsqu'il est jugé que la luminosité du pixel est supérieure à celle du point de conversion noir, juger que la luminosité du pixel est supérieure à la luminosité de référence ; et
(c-24) lorsqu'il est jugé que la luminosité du pixel est inférieure à la luminosité de référence, multiplier le pixel par le premier poids de la région ayant la luminosité maximale, appliquant ainsi un contraste.

16. Procédé d'affichage d'image selon la revendication 15, dans lequel lorsqu'il est jugé à l'étape (c-22) que 40% du total des pixels des données d'image ont une luminosité inférieure à la luminosité moyenne de la luminosité maximale, les données d'image appliquées sont sorties telles quelles, sans aucune conversion.

17. Procédé d'affichage d'image selon la revendication 15, dans lequel lorsqu'il est jugé à l'étape (c-23) que la luminosité du pixel est inférieure à celle du point de conversion noir, le pixel appliqué est sorti tel quel, sans aucune conversion.

18. Procédé d'affichage d'image selon la revendication 15, dans lequel lorsqu'il est jugé à l'étape (c-24) que la luminosité du pixel est supérieure à la luminosité de référence, le pixel est multiplié par le second poids de la région ayant la luminosité maximale, et une valeur de décalage préétablie est ajoutée au résultat de multiplication de sorte qu'un contraste soit appliqué.

19. Procédé d'affichage d'image selon la revendication 10, dans lequel la luminosité à laquelle la luminosité de rétroéclairage est ajustée à l'étape (d) dépend de la région à laquelle appartient la luminosité de référence des données d'image.

20. Procédé d'affichage d'image selon la revendication 10, dans lequel la tension de pilotage de rétroéclairage à l'étape (d) est commandée par un procédé de commande quelconque sélectionné parmi des procédés de commande PWM, PAM, et PFM.
